# EUROPEAN PATENT APPLICATION

(11) **EP 3 964 975 A1**
(43) Date of publication of application: **09.03.2022**
(21) Application number: 19948787.7
(22) Date of filing: 18.10.2019
(51) Int. Cl.: G06F 16/23, G06F 16/26

(54) **METHOD FOR TAKING INTO ACCOUNT AMENDMENTS TO THE CONTENTS OF REGULATORY DOCUMENTS TO ENSURE FLIGHT SAFETY**

(30) Priority: 08.10.2019 RU 2019131742
(71) Applicant: Public Joint Stock Company Aeroflot-Russian Airlines, Moscow, 119019 (RU)
(72) Inventor: KORENEVSKII, Aleksei Iurievich, Moscow, 125466 (RU); ZHURAVLEV, Roman Sergeevich, Moscow, 129081 (RU); NESTOIANOV, Aleksandr Aleksandrovich, Moscow, 125367 (RU); GRIGORENKO, Aleksei Igorevich, Moscow, 141002 (RU)
(74) Representative: Ingenias Creaciones Signos e Invenciones S.L.P.
(86) International application number: PCT/RU2019/000748
(87) International publication number: WO 2021/071380

(57) **Abstract**

The invention relates to the field of training and knowledge assessment and can be used in the training or refresher training of flight crew and support personnel in order to ensure flight safety. Proposed is a method for taking into account amendments to the contents of regulatory documents to ensure flight safety, which includes: extracting from regulatory documents fragments that have a complete meaning, and assigning each of said fragments a unique identification feature; generating individual directives of a training program, and indicating those directives that use fragments from regulatory documents; showing, for the directives that use fragments from regulatory documents, the identification features of the relevant fragments; and checking that a set of directives of an amended training program which contains directives that do not use features of replaced or deleted fragments that have not been replaced by new features complies with a usability criterion applicable to the training program. If the amended training program complies with said usability criterion, the amended program will continue to be used; if the amended training program does not comply with the usability criterion, use of the amended program is suspended until all of the directives of the training program have been brought into compliance with the usability criterion by replacement of the directives of the training program with input from an operator.

## Description

### FIELD OF INVENTION

The invention relates to the field of training and knowledge assessment and can be used in professional areas where a constant update of knowledge takes place, including regulatory documents directly used by personnel in professional activities. The invention can be used, in particular, to ensure flight safety during training and refresher training of flight crew and support personnel. The invention can be used in the preparation of training programs, improvement of existing programs, as well as in the preparation of training aids and testing materials.

The training program in this description means a complex of training, methodological and testing materials that determine the content, volume, and also the procedure for studying and teaching an academic discipline or its section.

### BACKGROUND OF THE INVENTION

A method for improving the qualifications of flight crew is known, described in the application No. 97101416 of the Russian Federation, published on February 20, 1999, describing the use of a training model, the method taking into account the personal experience of the personnel to be trained. The known method is not universal and can only be used for psychological correction of personnel behavior, if necessary.

In the patent No. 2158965 of the Russian Federation, published on November 10, 2000, a method of forming a training program is described, which is the closest analogue of the proposed invention, wherein said method involves a computational analysis of the training program using a matrix of concepts. When implementing the known method, a list of standard units of knowledge is formed and recorded, which are used as the concepts contained in the initial training program, the significance of each concept in the list is assessed by establishing its relationship with other concepts, and then an updated list of concepts is formed, which includes the most significant of them, and on the basis of the updated list, the optimal training program is formed.

The known method is intended for generating the training program that is optimal from the point of view of mastering the training material and is not intended for the prompt introducing of the amendments to the content of the training material. Said circumstance is not a significant drawback in many areas of using the known method, since the task of most training programs is to teach students basic knowledge and skills necessary for further independent work. When using the method for continuous improvement of knowledge and skills of persons responsible for flight safety, the impossibility of prompt automated updating of training programs is a significant drawback.

The problem to be solved by the proposed method is to eliminate the drawbacks of the methods known from the prior art with the provision of a technical result, in comparison with the prototype, which consists in ensuring an increase in flight safety, as well as in reducing the time and labor costs for updating training, certification and examination programs, which programs taking into account dynamic amendments in regulatory documents and promptly taking into account both positive and negative experience of the personnel ensuring flight safety.

The proposed invention allows overcoming at least part of the above drawbacks or all of them, as well as realizing the advantages of the present invention, as described within the scope of the present invention.

### SUMMARY OF THE INVENTION

To achieve the above technical result, a method for taking into account amendments to the contents of regulatory documents while ensuring flight safety is proposed, the method comprising: forming a database of regulatory documents; extracting fragments that have a complete meaning from regulatory documents, and assigning each of said fragments a unique identification feature; generating individual directives of a training program, and indicating those directives that use fragments from regulatory documents; showing, for the directives that use fragments from regulatory documents, the identification features of the relevant fragments; and generating a usability criterion of the training program, wherein the criterion using a predetermined set of directives of the training program; extracting the fragments having a complete semantic content from updated regulatory document when updating the regulatory document in the database of regulatory documents; checking the fragments extracted from the updated regulatory document with fragments of the replaced regulatory document of the database, determining the identification features of the replaced and deleted fragments of the database documents and assigning unique identification features to the replacement and new fragments of the replacing regulatory document; determining the possibility of automated replacement of the replaced and deleted fragments with replacement and new fragments for directives that use the identification features of the replaced and deleted fragments, and performing an automated replacement with the indication of the identification features of the replacement fragments; checking the compliance of the set of directives of the amended training program, which set containing directives that do not use the features of replaced and deleted fragments not replaced by new features, with the usability criterion of the training program, and if the amended training program complies with the usability criterion, continuing to use the amended training program, and if the amended training program does not comply with the usability criterion, suspending the use of the amended training program until the set of directives of the training program is brought into compliance with the usability criterion by replacing the directives of the training program with input from an operator.

In one of the specific embodiments, the replacement of the directives of the training program is continued during the process of using the training program with the indication of the identification features of the replacement fragments.

In one of the specific embodiments, the identification features of the replacement fragments are indicated after the completion of the new directive generation.

In one of the specific embodiments, individual features have overlapping areas of text or images.

In one of the specific embodiments, the use of the features of regulatory documents in the directives of the training program is carried out at least in the form of quotations from regulatory documents, references to regulatory documents or the transfer of the semantic content of fragments of regulatory documents.

In one of the specific embodiments, critical fragments are extracted from the replacement and new fragments of regulatory documents , without the use of which it is impossible to use the training program, and the use of the new training program is suspended until the use of said fragments in the new training program begins.

In one of the specific embodiments, the directives to be replaced of the training program are sorted according to the degree of importance in the training program.

### BRIEF DESCRIPTION OF THE DRAWINGS

FIG. 1 illustrates a diagram of an exemplary embodiment of an automated process "Loading a document into a library";
FIG. 2 illustrates a diagram of an exemplary embodiment of the automated process "Loading a new version of a document":
FIG. 3 illustrates a diagram of an exemplary embodiment of the automated process "Comparing the document versions and processing the comparison results".
FIG. 4 illustrates a diagram of an exemplary embodiment of the automated process "Updating the comparison results (locking/unlocking the questions and training materials)".
FIG. 5 illustrates a diagram of an exemplary embodiment of the automated process "Generating a content tree".
FIG. 6 illustrates a diagram of an exemplary embodiment of the automated process "Generating a training course".
FIG. 7 illustrates an exemplary embodiment of the diagram of an automated process for generating an exam.
FIG. 8 illustrates an exemplary embodiment of the diagram of the automated process "Updating the training/exam content".
FIG. 9 illustrates an exemplary embodiment of the diagram of an automated process "Processing the blocked questions".
FIG. 10 illustrates a diagram of an exemplary embodiment of the automated workflow of an automated subsystem - a robot for publishing updates of training materials and questions, followed by the generation of a news feed about updating the content and launching said feed.
FIG. 11 illustrates a simplified example of a hardware implementation of the present invention;
FIG. 12 illustrates an example of a computing system, which example is suitable for implementing the elements of the present invention;
FIG. 13 illustrates a block diagram of an exemplary embodiment of a method for carrying out the present invention.

### DESCRIPTION OF THE EMBODIMENTS OF THE INVENTION

The objects and features of the present invention, methods for achieving these objects and features will become apparent by reference to exemplary embodiments. However, the present invention is not limited to the exemplary embodiments disclosed below, but may be embodied in various forms. The essence recited in the description is nothing more than specific details provided to assist a person skilled in the art in a comprehensive understanding of the invention, and the present invention is defined only within the scope of the appended claims.

Used in the present description of the invention, the terms "module", "component", "element", "part", "block", "integral part" and the like are used to refer to computer entities that can be hardware, for example, a device or part of a device, in particular, including at least one processor, microcontroller, etc., or software, such as a computer program, firmware, or other set of sequence of control instructions, allowing the hardware of the computing system to perform computations or control functions that are a combination of instructions and data.

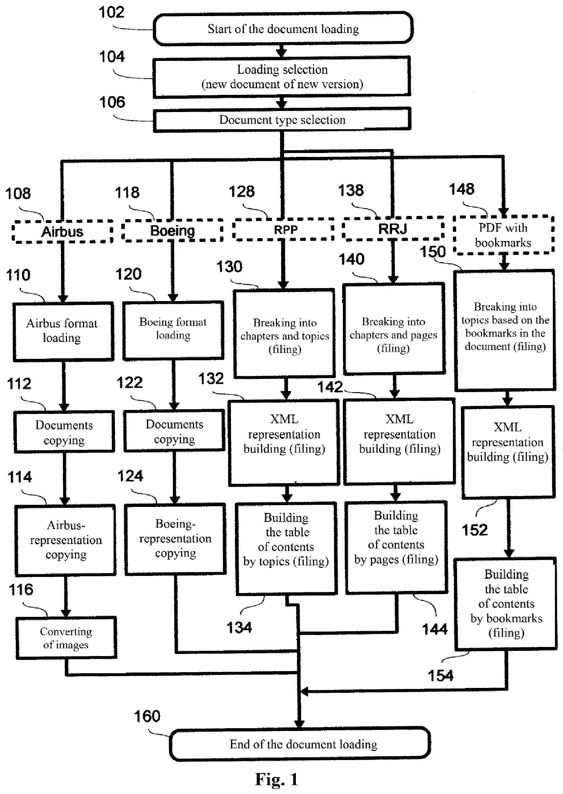

The described invention can be used for professional training and certification of knowledge of airline flight crew, professional training of specialists of any other profile, in industries where the receipt and use of dynamically changing information (content) is an important part of the activity that significantly affects the safety of work. FIG. 1 - FIG. 4 show diagrams of exemplary embodiments for automated processes associated with the generation of a document library.

Shown in FIG. 1 - FIG. 4, the first group of automated processes refers to the generation of a library of documents, the content of which can change over time. The content of each of the documents can be structured and converted into XML format. Documents are grouped by classifiers, and the established document classes are linked to the table of contents nodes of the document library. When a new or changed version of the document appears, the new version is loaded to the same node of the table of contents. For the old and new versions, a comparison is made, a protocol of comparison results is formed, which contains a list of DUs (document units or parts of documents), in which the differences between the old and new versions are recorded. Differences can be labeled according to their nature. For example, when marking with colors, "deleted" is marked in blue," added " - in green, "changed" - in red. Training materials and exam questions that are marked as "deleted" are marked as conditionally blocked and cannot be further used, for example, cannot be submitted to students for an exam. In a particular case, materials can be used after correcting them. For other materials, references used in documents are replaced with references related to new or current versions of documents, for example, if an outdated version of a document can be useful from the point of view of the logic of building the educational processes. Verified and approved training materials and questions are used in the training process or in the process of staff development. For example, materials can be published on the Training Portal. The publication can be carried out immediately or can be postponed for a predetermined time. A fixed time for the publication can also be set.

Thus, FIG. 1 shows a diagram of an exemplary embodiment of an automated process "Loading a document into a library".

At step 102, the document loading process begins.

At step 104, a choice is made to load a document, in particular, loading of a new document or loading of a new version is selected.

At step 106, the document type is selected.

If the Airbus document type (108) was selected at step 106, then at step 110 the loading of the Airbus format is carried out. Next, at step 112, the documents are copied. Then, at step 114, the Airbus-representation is copied, after which, at step 116, the images are converted, and the document loading process ends at step 160.

If the Boeing document type (118) was selected at step 106, then at step 120 the loading of the Boeing format is carried out. Next, at step 122, the documents are copied. Then, at step 124, the Airbus-representation is copied, and the document loading process ends at step 160.

If, at step 106, the RPP document type (128) was selected, then at step 130, the breaking into chapters and topics (filing) is carried out, after which, at step 132, the XML representation is built (filing). Next, at step 134, the table of contents is built by topics (filing), and the document loading process ends at step 160.

If, at step 106, the RRJ document type (138) was selected, then at step 140, the division into chapters and pages (filing) is carried out, after which, at step 142, the XML representation is built (filing). Next, at step 144, the table of contents is built by pages (filing), and the document loading process ends at step 160.

If the PDF document type with bookmarks (148) was selected at step 106, then at step 150, breaking into topics is carried out based on the bookmarks in the document (filing). Next, at step 152, the XML representation is built (filing), after which, at step 154, the table of contents is built by bookmarks (filing), and the document loading process ends at step 160.

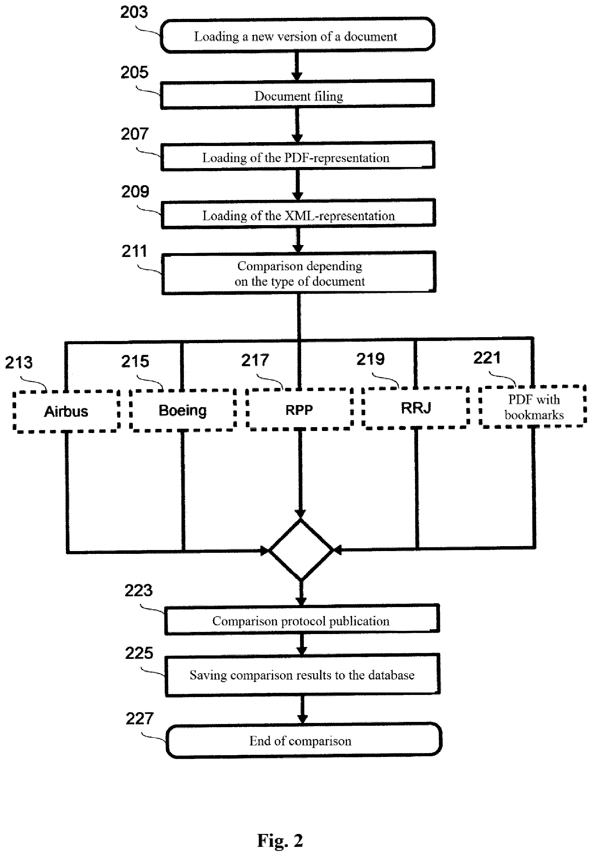

FIG. 2 shows a diagram of an exemplary embodiment of the automated process "Loading a new version of a document".

At step 203, the process of loading a new version of the document begins.

At step 205, the document filing is carried out.

At step 207, the loading of the PDF-representation is carried out.

At step 209, the loading of the XML-representation is carried out.

At step 211, a comparison is carried out depending on the type of document, in particular, the model of the aircraft to which the document belongs can be selected, for example, Airbus (213), Boeing (215), RPP (217), RRJ (219), or the type of document e.g. PDF with bookmarks (221). In the case of a document with bookmarks, a type, such as an aircraft model, can be defined for each of the bookmarks.

At step 223, the comparison protocol is published.

At step 225, the comparison results are saved to the database, and at step 227, the comparison is completed.

The mentioned comparison results, as well as other data, including documents, etc., can be stored on a physical data storage, logically organized and ordered in a database (DB). Said data storage can be a temporary storage device, for example, Random Access Memory (RAM), a permanent storage device, for example, (Programmable) Read Only Memory (ROM/EPROM), including implemented by at least one chip or a chipset, etc. In a particular case, the mentioned data storage is a device for storing information/data and can be implemented with at least one hard disk drive (HDD), solid state drive (SSD), solid-state hybrid drive (SSHD), storage area network (SAN), network storage system/network attached storage (NAS) and/or any other device or set of devices that allows at least writing to the device, reading from the device and/or storing data on the device. Data in data storages can be stored in any known data format, for example, in the form of at least one table or a set of database tables that are related or unrelated to each other.

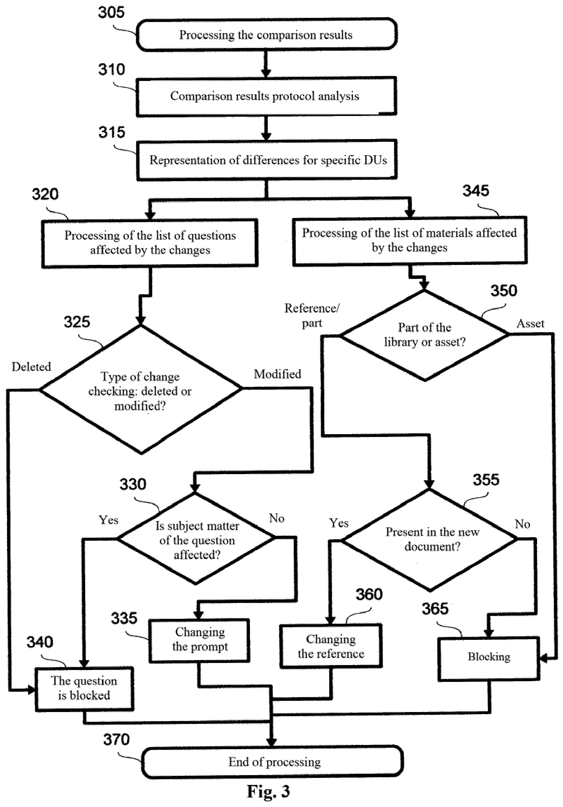

FIG. 3 shows a diagram of an exemplary embodiment of the automated process "Comparing the document versions and processing the comparison results".

At step 305, the process of processing the comparison results begins.

At step 310, a previously compiled comparison protocol is analyzed.

In step 315, a representation of differences for specific DUs is generated.

At step 320, the list of questions affected by the changes is processed, and at step 325, the type of change is checked, that is, it is determined whether the change is deletion or change (modification).

If at step 325 it is determined that the change relates to deletion, then at step 340 the previously valid question (or other substantive part of the document) is blocked and at step 370 the processing ends.

If it is determined at step 325 that a modification has been made, then at step 320 it is checked whether the subject matter of the question is affected. If the subject matter of the question is affected, then at step 340 the question is blocked and at step 370 processing ends. If the subject matter of the question is not affected, then at step 335 the prompt is changed and at step 370 the processing ends.

At step 345, the processing of the list of materials affected by the changes is carried out. At step 350, each of the materials affected by the changes is checked. If the changes concern references or parts of the library representing the document, and the changes can be introduced to the new document, are present in the new document, then step 360 is carried out. If at step 350 it is established that the changes concern the entire document being changed, that is, they are an asset, or at step 355 it is established that no changes have been introduced to a new document, then at step 365 the document is blocked and the document is excluded from the training program, at step 370 processing ends, otherwise, if "reference/part of the library", then at step 355, a check is made for the presence in the new document. If the presence in the new document is established at step 355, then the reference is replaced at step 360 and processing ends at step 370.

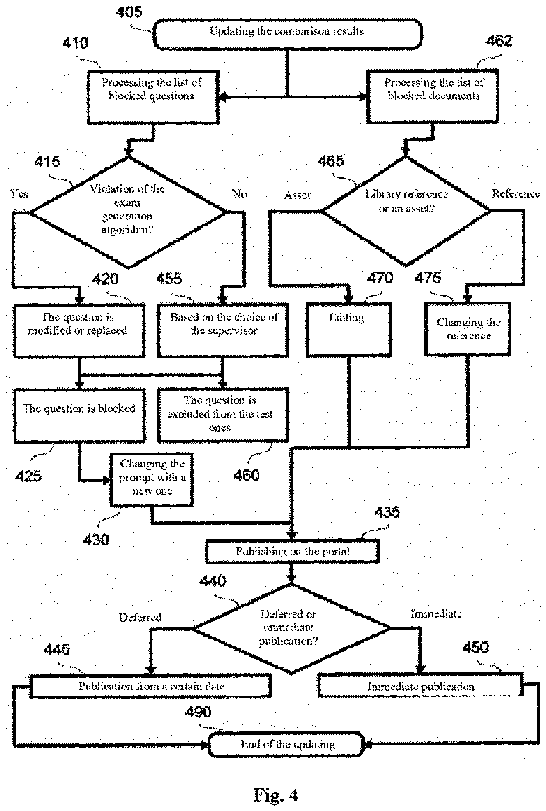

FIG. 4 shows a diagram of an exemplary embodiment of an automated process for updating the comparison results produced in accordance with the method disclosed in FIG. 3 The process of updating the comparison results begins at step 405.

At step 410, the list of blocked questions is processed, after which at step 415 violations of the exam generation algorithm, if any, are detected. Violations of the exam generation algorithm may be an insufficient number of questions, the absence of questions that are key for the training course, or the absence of the required number of questions in the exam papers.

If, at step 415, a violation of the exam generation algorithm was detected, then at step 420, the question is modified or replaced, and the updating process proceeds to step 425, in which the question is unlocked if the request is modified, or to step 460, in which the question is removed from test questions in case of replacing the question.

Next, the updating process proceeds to step 430, in which the prompt is replaced with a new one, and then proceeds to the publishing process in the portal (435), and in step 440, the necessity of immediate publication or deferred publication is checked. If it is determined at step 440 that deferred publication is required, then at step 445, the publication is carried out from a certain date, and the update process ends at step 490. If it is determined at step 440 that immediate publication is required, then at step 450, immediate publication is carried out and the update process ends at step 490.

If at step 415 no violation of the exam generation algorithm was detected, then at step 455 the supervisor determines whether to unlock the question or exclude the question from the test questions and, depending on the supervisor's decision, the process proceeds to step 425 if the supervisor decided to unlock the question, or to step 460 if the supervisor decided to exclude the question from the test questions, then the process proceeds to step 430.

At step 462, processing of the list of blocked documents begins, after which at step 465, a check is made whether the replacement is only a reference replacement or the replacement concerns the document subject matter, that is, the replacement is an asset. If "Asset", then at step 470, editing is performed and the update process proceeds to step 435, otherwise, if "Reference", then at step 475, the reference is replaced and the update process proceeds to step 435.

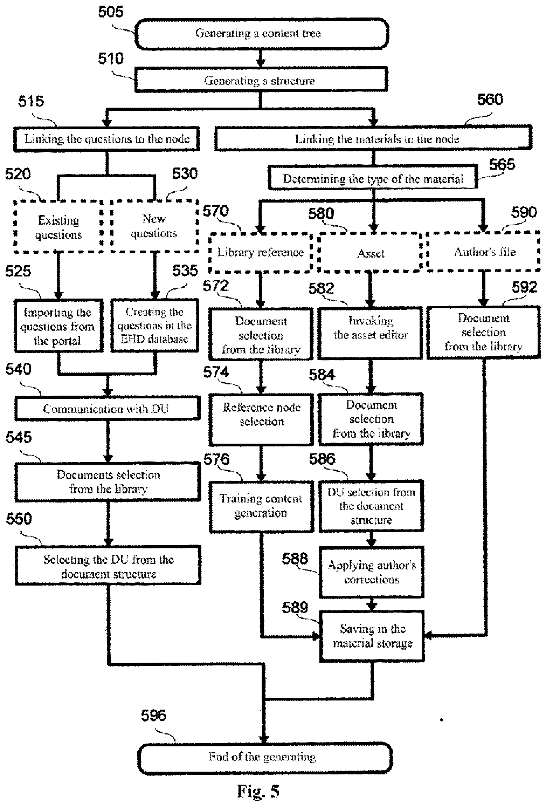

FIG. 5 - FIG. 7 show diagrams of exemplary embodiments for automated processes associated with the generation of a content tree.

Shown in FIG. 5 - FIG. 7 the second group of automated processes is associated with the generation of the content tree: a tree structure is built that reflects the content of training courses, the main content of the tree is formed in its terminal nodes, a set of questions and a set of training materials (both standardized in the form of ready-made documents, and non-standard, i.e. created by the author in the form assets) is linked to each terminal node of the tree; when forming a tree structure, a number of functions are provided (adding a new node, replacing a node name, deleting a node, moving a node through the tree structure), exam questions are linked to each node in the tree through the DU of documents in the library, also there is a function for viewing questions linked to a tree node, the function of generating a new training course and a new exam, which are collected on a separate buffer portal, has been implemented.

Thus, FIG. 5 shows a diagram of an exemplary embodiment of the automated process "Generating a content tree".

The process of generating the content tree begins at step 505.

At step 510, the structure is generated.

At step 515, the questions are linked to the node.

For existing questions (520), at step 525, the questions are imported from the portal, and the process of generating the content tree proceeds to step 540, in which the DU is communicated. For new questions (530), at step 535, questions are created in the EHD database, after which the process of generating the content tree proceeds to step 540.

Next, at step 545, the DU is selected from the document structure, and at step 596, the process of generating the content tree ends.

At step 560, materials are linked to node 560, followed by a determination of the type of material at step 565.

If it is determined at step 565 that the material type is a library reference (570), then, at step 572, the document is selected from the library, after which at step 574 the reference node is selected. Next, at step 576, the training content is generated, after which at step 589, the saving in the material storage is carried out, and at step 596, the process of generating the content tree ends.

If it is determined at step 565 that the material type is an asset (580), then at step 582 the asset editor is invoked, after which at step 584 the document is selected from the library. Next, at step 586, the DU is selected from the document structure. At step 588, the author's corrections are applied, and at step 589, the saving in the material storage is carried out, and at step 596, the process of generating the content tree ends.

If it is determined at step 565 that the material type is the author's file (590), then at step 592, a document is selected from the library. Next, at step 589, the saving in the material storage is carried out, and in step 596, the process of generating the content tree ends.

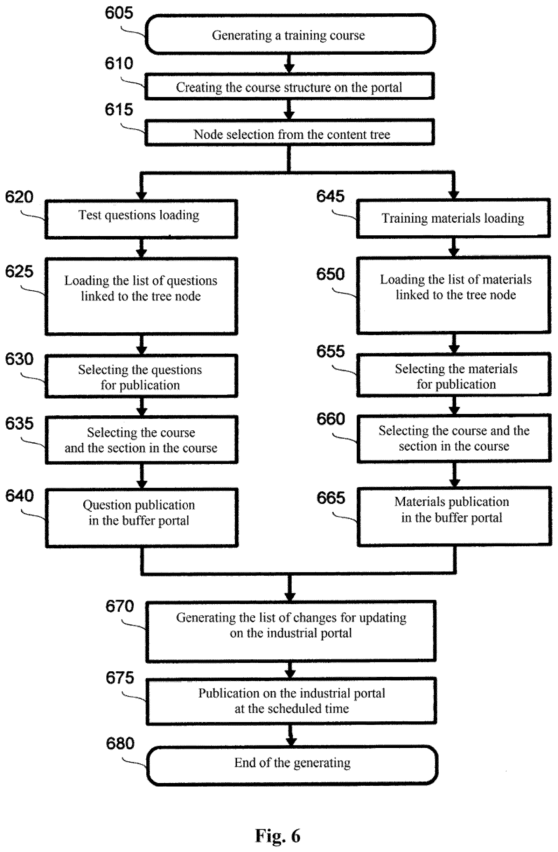

FIG. 6 shows a diagram of an exemplary embodiment of the automated process "Generating a training course".

The process of generating the training course begins at step 605.

At step 610, the course structure is created on the portal. Next, at step 615, a node is selected from the content tree.

At step 620, the test questions are loaded, after which at step 625 the list of questions linked to the tree node is loaded.

At step 630, questions are selected for publication, and at step 635, a course and section in the course are selected, after which, at step 640, the question is published on the buffer portal.

Next, at step 670, the list of changes is generated for updating on the industrial portal, and at step 675, the publication on the industrial portal is carried out at the scheduled time, after which at step 680 the process of generating the training course ends.

At step 645, the training materials are loaded, after which at step 650, the list of materials linked to the tree node is loaded.

Next, at step 655, the selection of materials for publication is carried out, and at step 660, the selection of the course and section in the course is carried out.

Next, at step 665, the materials are published in the buffer portal, after which the process of generating the training course proceeds to step 670.

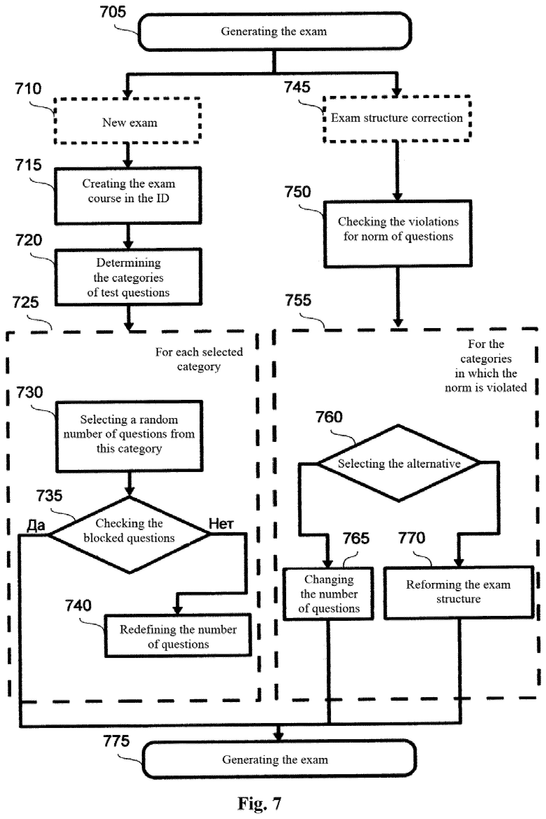

FIG. 7 shows an exemplary embodiment of diagram of an automated process for generating an exam.

The process of generating the exam begins at step 705.

At step 715, if a new exam (710) is being generated, an exam course is created in the ID (individual directives of the subject of training), after which, at step 720, the categories of test questions are determined.

Next, for each selected category (725), at step 730, a random number of questions from this category is selected and at step 735 the blocked questions are checked, and if there are blocked questions, the process ends at step 775, otherwise, at step 740, the number of questions is redefined, after which the generation of the exam is considered complete (not shown in the diagram).

At step 755, if the exam structure is being corrected (745), a check for norm of questions violations is carried out.

Further, for the categories in which the norm is violated, at step 760, an alternative is selected - whether it is necessary to change the number of questions or to reform the exam structure.

If it is required to change the number of questions, then at step 765 the number of questions is changed and the process ends at step 775. If reforming the exam structure is required, then at step 770, the exam structure is reformed, and the process ends at step 775.

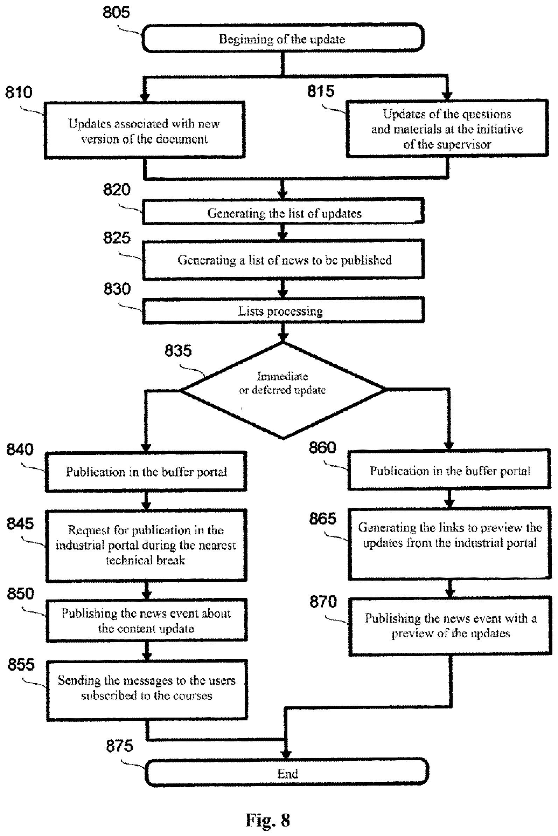

FIG. 8 - FIG. 10 show diagrams of exemplary embodiments for automated processes associated with updating of dynamic training/exam content.

Shown in FIG. 8 - FIG. 10 the third group of automated processes is associated with updating dynamic training/exam content: an update table is formed, which includes two types of updates (for questions and for training materials), a list of necessary updates to the original source is generated in the "dashboard" program, if there are potentially blocked questions, the possibility to generate an exam is checked (for this, all blocked questions are collected in a separate category called "blocked questions" and the supervisor has the opportunity to edit them or relink the questions in order to save the "norm of questions" for the exam), a news event is automatically generated containing information about the updated document and its versions, the publication of updates on the industrial portal is carried out by a robot program, which is launched at the nearest technical break (at the predetermined time), informing about changes in documents is carried out through the news feed with the possibility of detailed viewing all proposed replacements in preview mode, and notifications are sent to users.

Thus, FIG. 8 shows an exemplary embodiment of the diagram of the automated process "Updating the training/exam content".

The updating process begins at step 805.

At step 810 the data associated with the version of the document are updated.

At step 815, the questions and materials are updated at the initiative of the supervisor.

Next, at step 820, a list of updates is generated, after which, at step 825, a list of news to be published is generated, which (lists) are processed at step 830.

At step 835, a check is carried out whether an immediate or deferred update is necessary, depending on the importance of the updates. For example, updates generated from the analysis of emergencies require immediate updating, other updates can be made as documents are processed.

If a deferred update is possible, at step 840, publication in the buffer portal is carried out, and at step 845, a request for publication in the industrial portal is generated during the nearest technical break.

Next, at step 850, the news event about the content update is published, after which at step 855, messages are sent to the users who subscribed to the courses, and the update process ends at step 875.

If an immediate update is required, at step 860, the publication on the buffer portal is carried out, and at step 865, links are generated to preview the updates from the industrial portal.

Next, at step 870, the news event is published with a preview of the updates, and the update process ends at step 875.

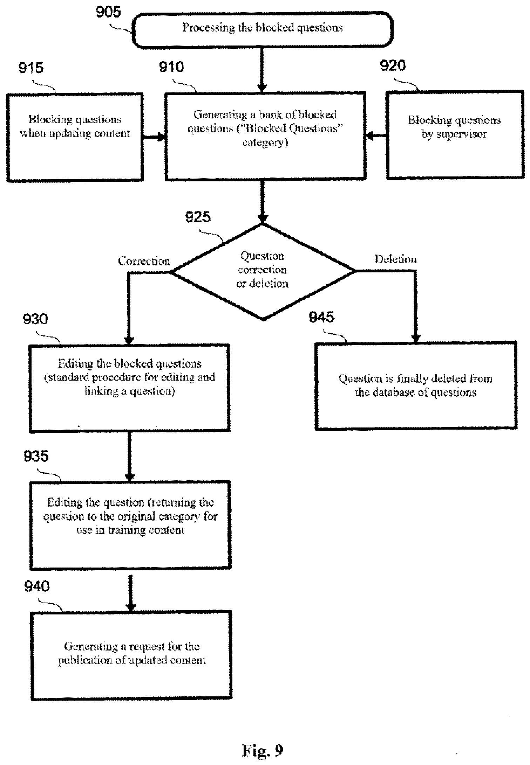

FIG. 9 shows an exemplary embodiment of the diagram of an automated process "Processing the blocked questions".

The process for processing blocked questions begins at step 905.

At step 910, a bank of blocked questions ("Blocked Questions" category) is generated by blocking questions when updating content at step 915 and blocking questions by the supervisor at step 920.

Further, at step 925, a check is carried out to correct or delete the question, if it is deletion, then at step 945 the question is finally deleted from the database of questions. Otherwise (in case of correction), at step 930, the blocked questions are edited (standard procedure for editing and linking a question) and at step 935 the question is edited (returning the question to the original category for use in training content), after which at step 940 a request for the publication of updated content is generated.

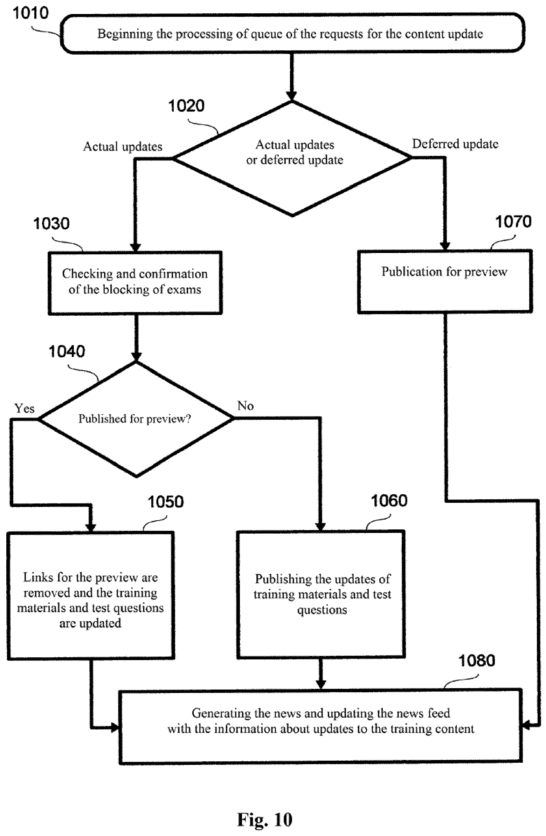

FIG. 10 shows a diagram of an exemplary embodiment of the automated workflow of an automated subsystem - a robot for publishing updates of training materials and questions, followed by the generation of a news feed about updating the content and launching said feed.

The process for processing the queue of the requests for the content update begins at step 1010.

At step 1020, a check is performed for actual updates and deferred update.

In the case of actual updates, at step 1030, a check and confirmation of the blocking of exams is carried out, after which at step 1040, the fact of publication for preview is checked. If it was published for preview, then at step 1050, the links for the preview are removed and the training materials and test questions are updated, after which at step 1080, news are generated and the news feed is updated with information about updates to the training content.

In the case of a deferred update, at step 1070, a publication for preview is carried out, and at step 1080, news are generated and the news feed is updated with information about updates to the training content.

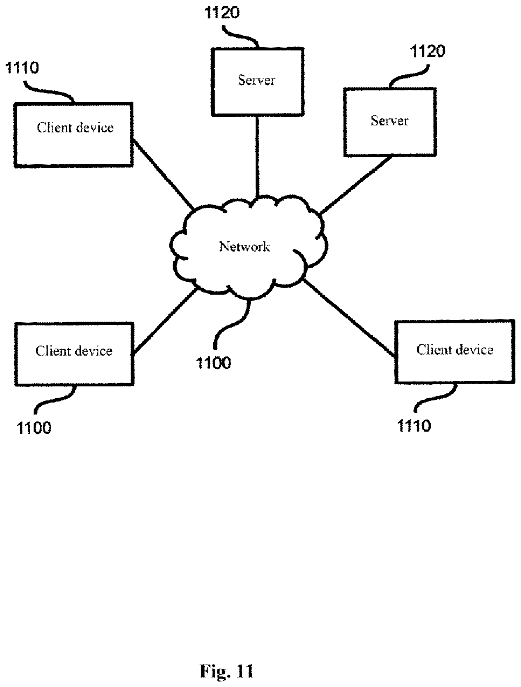

FIG. 11 shows a simplified example of a hardware implementation of the present invention. A computer network can be a geographically dispersed collection of nodes connected by communication lines and segments for transferring data between end nodes such as personal computers, workstations, or peripheral devices such as printers or scanners. There are many types of networks available, from local area networks (LANs) to wide area networks (WANs).

As shown in FIG. 11, an exemplary computer network 1100 may include a variety of network devices, such as routers, switches, computers, and the like, interconnected by communication lines. For example, multiple network devices can connect one or more user devices ("client devices") 1110 that can be used by the user, such as computers, smartphones, tablets, and so on. Communication channels connecting various network devices can be wired lines or shared environments (e.g., wireless links) where certain devices can communicate with other devices based on distance, signal level, current operating state, location, and the like.

Communication channels can connect different network devices in any possible configuration.

One or several servers 1120 (e.g., host servers, web servers, databases, etc.) may communicate with the network 1100 and thus with multiple client devices 1110. It will be understood by those skilled in the art that any number and location of nodes, devices, communication lines, etc. can be used in a computer network, and the illustration shown in

FIG. 11 is a simplified example of a hardware implementation of the system.

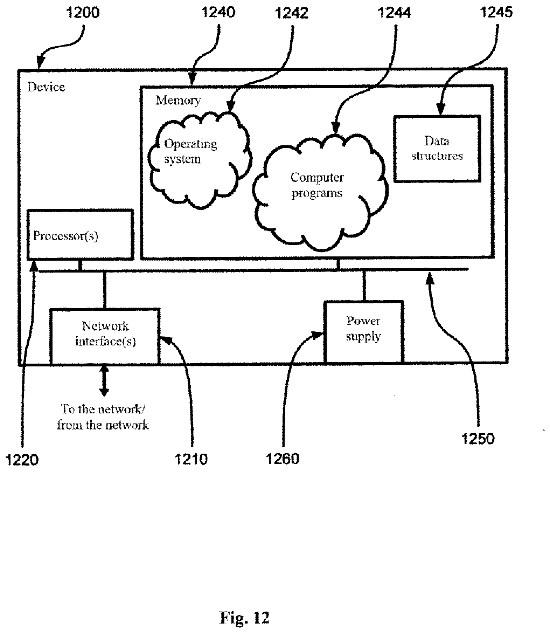

FIG. 12 shows an example of a computing system, which example is suitable for implementing the elements of the present invention. As shown in FIG. 12, the computing system includes a computing device 1200 that may be used as a user or server device, the memory 1240 of which stores an operating system 1242, computer programs 1244, and data structures 1245.

Memory 1240 of device 1200 is connected by bus 1250 to power supply 1260, at least one processor 1220, and at least one network interface 1210 transmitting data to network 1100 (FIG. 11) and from network 1100 (FIG. 11).

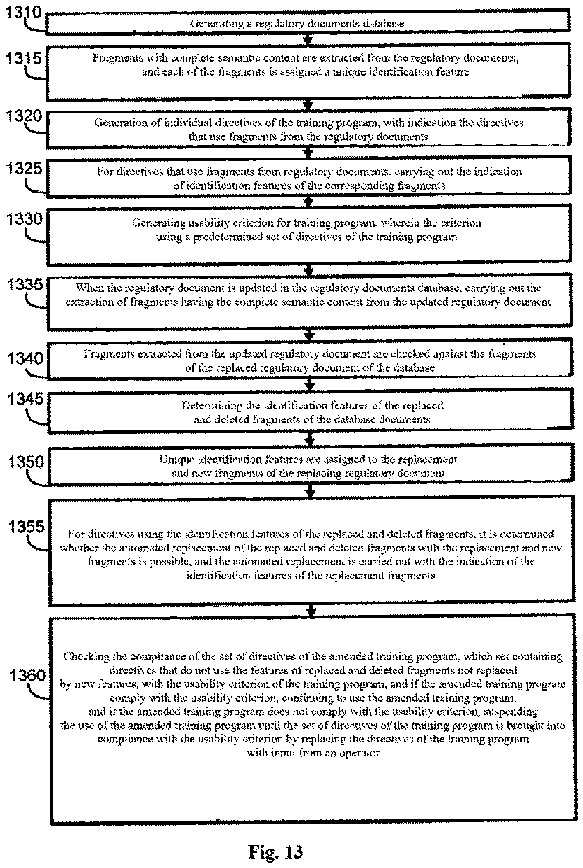

FIG. 13 shows a block diagram of an exemplary embodiment of a method for carrying out the present invention according to the independent claim.

At step 1310, the regulatory documents database is generated.

At step 1315, fragments with complete semantic content are extracted from the regulatory documents, and each of the fragments is assigned a unique identification feature.

At step 1320, the generation of individual directives of the training program is carried out, indicating the directives that use fragments from the regulatory documents.

At step 1325, for directives that use fragments from regulatory documents, the indication of identification features of the corresponding fragments is carried out.

In a particular case, individual features have intersecting sections of text or images.

In a particular case, the use of the features of regulatory documents in the directives of the training program is carried out at least in the form of quotations from regulatory documents, references to regulatory documents or the transfer of the semantic content of fragments of regulatory documents.

At step 1330, a usability criterion for training program is generated, wherein the criterion using a predetermined set of directives of the training program.

At step 1335, when the regulatory document is updated in the regulatory documents database, the extraction of fragments having the complete semantic content from the updated regulatory document is carried out.

At step 1340, the fragments extracted from the updated regulatory document are checked against the fragments of the replaced regulatory document of the database.

At step 1345, a determination of the identification features of the replaced and deleted fragments of the database documents is carried out.

In step 1350, unique identification features are assigned to the replacement and new fragments of the replacing regulatory document.

At step 1355, for directives using the identification features of the replaced and deleted fragments, it is determined whether the automated replacement of the replaced and deleted fragments with the replacement and new fragments is possible, and the automated replacement is carried out with the indication of the identification features of the replacement fragments.

In a particular case, from the replacement and new fragments of regulatory documents, critical fragments are extracted, without the use of which it is impossible to use the training program, and the use of the new training program is suspended until the use of said fragments in the new training program begins.

At step 1360, checking the compliance of the set of directives of the amended training program, which set containing directives that do not use the features of replaced and deleted fragments not replaced by new features, with the usability criterion of the training program, and if the amended training program comply with the usability criterion, continuing to use the amended training program, and if the amended training program does not comply with the usability criterion, suspending the use of the amended training program until the set of directives of the training program is brought into compliance with the usability criterion by replacing the directives of the training program with input from an operator.

In a particular case, the continuation of the replacement of the directives of the training program is carried out during the process of using the training program, with the indication of the identification features of the replacement fragments.

In a particular case, the identification features of the replacement fragments are indicated after the completion of the generation of a new directive.

In a particular case, the directives of the training program are sorted according to the degree of importance in the training program.

In conclusion, it should be noted that the information given in the description represents examples, which do not limit the scope of the present invention defined by the claims. One skilled in the art will appreciate that there may be other embodiments of the present invention consistent with the spirit and scope of the present invention.

## Claims

1. A method for taking into account amendments to the contents of regulatory documents to ensure flight safety, the method comprising:
forming a regulatory documents database;
extracting fragments with complete semantic content from the regulatory documents, and each of the fragments is assigned a unique identification feature;
generating individual directives of the training program, indicating the directives that use fragments from the regulatory documents;
showing, for the directives that use fragments from regulatory documents, the identification features of the relevant fragments;
and generating usability criterion for training program, wherein the criterion using a predetermined set of directives of the training program;
extracting the fragments having the complete semantic content from the updated regulatory document when updating the regulatory document in the regulatory documents database;
checking the fragments extracted from the updated regulatory document with fragments of the replaced regulatory document of the database,
determining the identification features of the replaced and deleted fragments of the database documents and
assigning unique identification features to the replacement and new fragments of the replacing regulatory document;
determining the possibility of automated replacement of the replaced and deleted fragments with replacement and new fragments for directives that use the identification features of the replaced and deleted fragments, and performing an automated replacement with the indication of the identification features of the replacement fragments;
checking the compliance of the set of directives of the amended training program, which set containing directives that do not use the features of replaced and deleted fragments not replaced by new features, with the usability criterion of the training program, and if the amended training program comply with the usability criterion, continuing to use the amended training program, and if the amended training program does not comply with the usability criterion, suspending the use of the amended training program until the set of directives of the training program is brought into compliance with the usability criterion by replacing the directives of the training program with input from an operator.

2. The method of claim 1, wherein the replacement of the directives of the training program is continued during the process of using the training program with the indication of the identification features of the replacement fragments.

3. The method of claim 2, wherein the identification features of the replacement fragments are showed after the completion of the new directive generation.

4. The method of claim 1, wherein the individual features have overlapping areas of text or images.

5. The method of claim 1, wherein the use of the features of regulatory documents in the directives of the training program is carried out at least in the form of quotations from regulatory documents, references to regulatory documents or the transfer of the semantic content of fragments of regulatory documents.

6. The method of claim 1, wherein from the replacement and new fragments of regulatory documents, critical fragments are extracted, without the use of which it is impossible to use the training program, and the use of the new training program is suspended until the use of said fragments in the new training program begins.

7. The method of claim 2, wherein the directives to be replaced of the training program are sorted according to the degree of importance in the training program.
